# NEW EUROPEAN PATENT SPECIFICATION

(11) **EP 1 966 267 B2**
(45) Date of publication and mention of the opposition decision: **16.07.2025**
(45) Mention of the grant of the patent: 13.12.2017
(21) Application number: 06765982.1
(22) Date of filing: 30.06.2006
(51) Int. Cl.: C08G 59/20, C08G 59/24, C08G 59/40, C08L 63/00, C08J 9/00, C08J 9/10, C08J 9/32, B62D 29/00

(54) **SOLID THERMALLY EXPANSIBLE MATERIAL**
FESTES THERMISCH EXPANDIERBARES MATERIAL
MATÉRIAU SOLIDE THERMO-EXPANSIBLE

(30) Priority: 01.07.2005 US 696183 P
(43) Date of publication of application: 10.09.2008
(73) Proprietor: SIKA TECHNOLOGY AG, CH-6340 Baar (CH)
(72) Inventor: ROSENBERG, Steven, Succasuma, NJ 07876 (US); KOW, Cheong, Troy, MI 48098 (US); HOEFFLIN, Frank, CH-5400 Baden (CH); FINTER, Juergen, CH-79102 Freiburg (CH); BLANK, Norman, CH-8803 Ruschlikon (CH)
(74) Representative: Isler, Jörg
(86) International application number: PCT/IB2006/052218
(87) International publication number: WO 2007/004184

(56) References cited:
- EP-A1- 0 775 721
- EP-A1- 0 798 354
- EP-A1- 1 090 813
- EP-A1- 1 728 825
- EP-A1- 1 741 734
- EP-A2- 0 899 300
- EP-A2- 0 899 300
- WO-A1-02/088214
- WO-A1-02/24451
- WO-A1-02/24451
- WO-A1-02/24451
- WO-A1-03/026947
- WO-A1-03/026947
- WO-A1-03/026947
- WO-A1-03/042024
- WO-A1-03/042024
- WO-A1-03/042024
- WO-A1-03/093387
- WO-A1-96/37400
- WO-A1-96/37400
- WO-A1-97/19124
- WO-A1-97/19124
- WO-A1-97/19124
- WO-A2-2007/012048
- JP-A- S59 179 536
- US-A- 5 274 006
- US-A- 6 150 428
- US-A- 6 150 428
- US-A1- 2004 058 181
- US-A1- 2004 131 840
- US-A1- 2004 221 953
- US-A1- 2004 221 953
- US-A1- 2004 266 898
- US-A1- 2004 266 899
- US-A1- 2005 159 511
- US-B1- 6 218 442
- US-B1- 6 348 513
- US-B1- 6 376 564
- US-B1- 6 403 222
- US-B1- 6 403 669
- US-B2- 6 479 560
- US-B2- 6 887 914
- S.M. LEE: "Reference Book For Composites Technology 1", vol. 5, 1989, article R S RAGHAVA: "Toughened Thermosetting Matrices and Their Composites", pages: 79 - 96
- "Resorcinol: Chemistry, Technology and Applications", 26 July 2005, SPRINGER, article RAJ B. DURAIRAJ: "7.7 Epoxy Resins", pages: 455 - 457
- "Reactive Polymers - Fundamentals and Applications", 15 July 2005, WILLIAM ANDREW, article J.K. FINK ET AL.: "Epoxy Resins", pages: 151 - 159
- J.H. HODGKIN ET AL.: "Thermoplastic toughening of epoxy resins: a critical review", POLYMERS FOR ADVANCES TECHNOLOGIES, vol. 9, 4 December 1998 (1998-12-04), pages 3 - 10
- Experimental Data

## Description

The present application claims the benefit of the filing date of U.S. Provisional Application Ser. No. 60/696,183, filed July 1, 2005.

Thermally expansible materials have long been used in the automotive industry and in several other industries. Thermally expansible materials are used for sound-deadening (baffling) purposes and for structural reinforcement purposes. For example, certain expansible materials can be molded onto a carrier and placed into an automotive cavity such as a pillar. Then, the expansible materials can be heated to an activation temperature. When the material is activated, it expands. Upon expansion, the material adheres to at least part of the automotive cavity, effectively sealing the cavity. Following expansion, the material is cured. The cured material has a sound-deadening or baffling effect.

Additionally, by way of example, certain expandable materials can provide structural reinforcement to surfaces, including surfaces in automobiles. For example, an expansible material (by itself or together with a carrier) can be disposed on, adjacent or near a substrate such as a plastic surface or a metal surface in an automotive structure such as a frame rail. The material is then heated to an activation temperature. When the material is activated, it expands. Upon expansion, the material adheres to at least a portion of the substrate. Following expansion, the material is cured. The cured material provides structural reinforcement for the substrate. That is, the substrate is less easily bent, twisted, crinkled and the like due to the presence of the cured material.

The Sika Corporation of Madison Heights, Michigan, sells thermally expansible materials under the SIKABAFFLE trade name, which are described in U.S. Pat. Nos. 5,266,133 and 5,373,027. The Sika Corporation also sells thermally expansible reinforcer materials under the trade name SIKAREINFORCER. A series of these thermally expansible reinforcer materials, owned by the Sika Corporation, are described in the U.S. Pat. No. 6,387,470.

There are certain desirable traits for thermally expansible materials used for reinforcement purposes. It is favorable for a thermally expansible material, in its uncured state, to be of a consistency that is easy to process using existing manufacturing equipment and to have a surface that is substantially tack free for ease of handling. It is favorable for an uncured expansible material to avoid premature curing and/or other degradation that could result from exposure to a high humidity, high temperature environment.

A thermally expansible material, in its cured state, should substantially maintain its mechanical properties across a temperature range of from about -40°C to about 80°C. A mechanical property is substantially maintained if it is of the magnitude *x* at its highest point in that temperature range and is about 0.8*x* at its lowest point in that temperature range. A cured material should have a glass transition temperature of at least about 90°C or higher. Other desired glass transition temperatures for cured materials are at least about 95°C, at least about 100°C, and at least about 105°C.

### Disclosure of Invention

### Advantageous Effects

The subject matter of the present invention is defined in claims 1-11 as attached. Embodiments described herein which are not covered by the claims merely serve to illustrate the technical context of the present invention.

A solid thermally expansible material is provided to satisfy one or more of the desired traits for thermally expansible reinforcement materials. Several embodiments of a solid thermally expansible material are described herein. The described embodiments are not intended to limit the scope of the appended claims. A solid thermally expansible material comprises a solid epoxy resin that is substantially free of liquid epoxy resin and semi-solid epoxy resin, wherein the content of liquid epoxy resin and semi-solid epoxy resin is from 0% by weight of the epoxy resin content to less than 1.5% by weight of the epoxy resin content of the solid thermally expansible material, an impact modifier, a curing agent and a heat-activated foaming agent; whereby said material is adherable to a substrate following heat activation. The solid epoxy resin comprises 40% to 80% by weight of the material, the material being 100%. The uncured expansible material has an outer surface that is substantially tack free in at least temperatures ranging from 0°C to 40°C, and can remain substantially tack free at temperatures nearing 50°C because there is substantially no presence of a liquid epoxy resin or a semi-solid epoxy resin sufficient to migrate to the outer surface of the material to cause such tack. Surprisingly, the uncured solid thermally expansible material is not brittle. Thus, the uncured material is surprisingly easy to process using common manufacturing equipment, even in the absence or substantial absence of liquid epoxy resin and semi-solid epoxy resin.

The solid thermally expansible material comprises an impact modifier that is substantially free of natural or synthetic rubber and comprises one or more thermoplastic chemicals that include functional groups to react with the epoxy groups of the epoxy resin to increase the over-all stability of the expansible material. The solid thermally expansible material is unexpectedly stable, exhibiting little to no phase separation between the epoxy resin and the one or more thermoplastic impact modifiers. This impact modifier brings a surprising degree of processibility to the solid thermally expansible material, given the absence or substantial absence of rubber, liquid epoxy resin, or semi-solid epoxy resin. The absence or substantial absence of rubber in the impact modifier provides an added advantage: the glass transition temperature of the cured material in this embodiment is at least 100°C, and can be at least 105°C or at least 110°C.

Also disclosed but not according to the invention are thermally expansible materials wherein the solid thermally expansible material comprises an impact modifier that comprises natural or synthetic rubber. These thermally expansible materials can additionally include one or more thermoplastic compounds, which include functional groups to increase the over-all stability of the expansible material. The rubber provides additional processibility to the solid material, while permitting the glass transition temperature of the cured material to be at least 90°C, and can be at least 95°C.

An embodiment of the solid thermally expansible material includes a moisture release control system comprising aramid fibers. It is difficult to fully resist or avoid all absorption of water into uncured thermally expansible materials during transport and storage in high temperature / high humidity environments. This embodiment complements efforts to avoid water absorption by regulating how water is released from the uncured material during heating/expansion. The presence of too much water in uncured expansible material is undesirable because it can cause damage to the expansible materials during expansion. This is because the heat during expansion causes violent bursts of steam through the foaming material, which results in irregular, non-uniform cell structure in the cured material. Surprisingly, it has been found that aramid fibers form a mesh-like physical screen that regulates the release of steam during expansion. This regulation reduces or minimizes the violent bursts of steam. Although aramid fibers have been disclosed in thermally expansible materials as thixotropic agents, they have not been disclosed for this new use.

### Description of Drawings

Fig. 1 is a perspective view of an automotive body.
Fig. 2 is a cut-away view of a rail from the automotive body showing uncured expansible material disposed in the rail.
Fig. 3 is a cut-away view of the rail showing cured material disposed in the rail.
Fig. 4 is a perspective view of a carrier with a solid thermally expansible material disposed thereon.
Fig. 5 is a perspective view of a carrier with a solid thermally expansible material disposed thereon.

### Mode for Invention

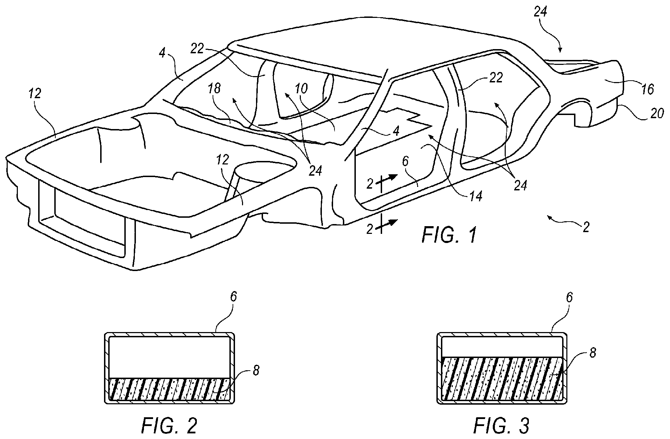

Figures 1-5 show one of many possible applications for the solid thermally expansible materials described herein. Figures 1-5 are not intended to limit the claimed invention to the automotive industry, or to any particular application within the automotive industry. In Figure 1, automobile 2 is shown identifying many (but not all) parts that can be reinforced with a solid thermally expansible material. Potentially rein-forceable structures on automobile 2 include but are not limited to A-pillar 4, rocker 6, child restraint reinforcer 10, rails 12, cross-member 14, fuel tank sealer 16, cowl 18, bumper 20, B-pillar 22, and door/liftgate 24. Figures 2 and 3 show a cutaway of rocker 6. In Figure 2, a solid thermally expansible material 8, in its uncured state, is disposed in rocker 6. In Figure 3, the material 8 is cured. Although Figure 3 shows the cured material partially filling a cavity, it is also contemplated that the cured material could seal or substantially seal the cavity.

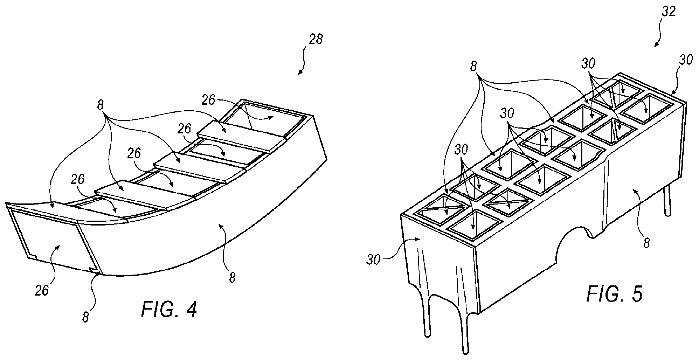

In Figure 4, carrier 26 (which can be metal or plastic) has uncured material 8 disposed thereon (via injection molding or any other technique). Together, carrier 26 and material 8 form an automotive part 28. Part 28 can be inserted into an automotive cavity, then upon heating to an activation temperature, material 8 expands and cures such that material 8 adheres to a substrate in the automotive cavity to provide reinforcement. In Figure 5, an alternative carrier 30 (which can be metal or plastic) has uncured material 8 disposed thereon (via injection molding or any other technique). Together, carrier 30 and material 8 form an automotive part 32. Part 32 can be inserted into an automotive cavity, then upon heating to an activation temperature, material 8 expands and cures such that material 8 adheres to a substrate in the automotive cavity to provide reinforcement.

Figures 1-5 show just one way, of many contemplated ways, that solid thermally expansible material 8 can be used to reinforce a substrate in an automobile or other structure. In another embodiment, material 8 could be disposed on a carrier by molding or some other method. Then, the carrier could then be inserted into and optionally secured within rail 6, then cured. Additionally, material 8, whether or not on a carrier, could be used to reinforce any substrate in automobile 2.

### Solid Epoxy Resins

'Epoxy resins' refer to a large range of chemicals containing multiple epoxy groups. Epoxy resins are well-known in the art and are described in the chapter entitled 'Epoxy Resins' in the Second Edition of the Encyclopedia of Polymer Science and Engineering, Volume 6, pp. 322-382 (1986).

The term 'solid' is used according to its ordinary meaning. A 'solid' epoxy resin is solid and tack free at about room temperature (from 20°C to 27°C), and at about standard pressure. A solid epoxy resin as used herein is substantially free of liquid epoxy resin and semi-solid epoxy resin as those terms are used according to their ordinary meanings. A liquid epoxy resin is liquid at about room temperature and at about standard pressure, and a semi-solid epoxy resin has both solid and liquid physical characteristics, especially tackiness and tendency to block at about room temperature and at about standard pressure. 'Substantially free' in this context means from 0% by weight of the epoxy resin content to less than 1.5% by weight of the epoxy resin content of the solid thermally expansible material. In functional terms, the presence of liquid and semi-solid epoxy resin should be so minimal that any migration of liquid and semi-solid epoxy resin to an outer surface of the solid expansible material in its uncured form would be insufficient to cause the surface to have discernable tackiness to a human touch.

Solid epoxy resins that can be used with the solid thermally expansible material include solid bisphenol A resins made by advancement of bisphenol-A-diglycidyl ether with bisphenol A or by a taffy process, including without limitation type 1 to type 9 resins, such as: EPON 1001, 1004 and 1007 (available from Resolution Performance Products); ARALDITE GT7004, GT7071, GT7014, GT7255, GT7097 and GT9654 (available from Huntsman Advanced Materials), and DER 661, DER 663, and DER 664 (available from The Dow Chemical Co.). Additional solid epoxy resins include novolac-based epoxy resins, including without limitation: EPON Resin 1031 and 164 1007 (available from Resolution Performance Products), ARALDITE EPN 1180, ECN 1280, ECN 1285 and ECN 9699 (available from Huntsman Advanced Materials); and DEN 438 and 439 (available from The Dow Chemical Co.). Additional solid epoxy resins include multifunctional epoxy resins such as tris(hydroxyphenyl)methane triglycidyl ether (available as TACTIX 742 from The Dow Chemical Co.), glyoxal phenol novolac tetraglycidyl ether (available as ARALDITE XB 4399-3), crystalline epoxy resins such as triglycidyl isocyanurate (available as PT810 from Huntsman), and terephthalic acid diglycidyl ester with trimellitic acid triglycidyl ester (available as PT910 from Huntsman).

Suitable solid epoxy resins can have Mettler softening points in the range of from 65°C to 160°C (more preferably, 70°C to 120°C). Suitable solid epoxy resins can have an average of about two epoxy groups per molecule. Suitable solid epoxy resins may show epoxide equivalent weights in the range of from 350 to 2000 (more preferably, 375 to 1000). Numerous epoxy resins meeting these requirements are available from commercial sources known to those of skill in the art and/or can be created by blending more than one commercially available epoxy resins.

A solid epoxy resin or combination of solid epoxy resins is present in the solid thermally expansible material, by weight percent, from 40% to 80% (more preferably, from 50% to 80% or from 60% to 75%), wherein 100% is the weight of the solid thermally expansible material.

### Impact Modifiers Or Tougheners

An 'impact modifier,' also known as a 'toughener,' refers to any material that is added to a formulation to improve the impact resistance of the formulation. Many commercially available impact modifiers are known in the art and are suitable for use in a solid thermally expansible material.

The impact modifier comprises one or more thermoplastic chemical and the impact modifier is substantially free of natural or synthetic rubber. It is surprising that an impact modifier that is substantially free of rubber could impart sufficient processibility on a solid thermally expansible material. 'Substantially free' in this context means from 0% to 1.5% by weight of rubber. Thermoplastic chemicals that have functional groups capable of reacting with the epoxy groups on the solid epoxy resins are suitable for use with the solid thermally expansible material. In particular, as non-limiting examples, ethylene butyl acrylate with glycidyl methacrylate (EBA with GMA) to provide epoxy functionality (to react with the epoxy groups of the solid epoxy resin) may be used. Ethylene vinyl acetate with maleic anhydride (EVA with MAH) to react with the epoxy groups of the solid epoxy resin may be used. The solid thermally expansible material in this embodiment is unexpectedly stable, exhibiting little to no phase separation between the epoxy resin and the one or more thermoplastic impact modifiers. This impact modifier brings a surprising degree of processibility to the solid thermally expansible material, given the absence or substantial absence of rubber, liquid epoxy resin, or semi-solid epoxy resin. In Examples 10-14, these thermoplastic impact modifiers, substantially free of rubber, led to solid thermally expansible materials having a glass transition temperature of 102°C, 112°C, 108°C, 108°C and 109°C, respectively.

Also disclosed but not according to the invention are thermally expansible materials wherein an impact modifier comprises rubber. The rubber can be natural or synthetic. The impact modifier may also include one or more thermoplastic chemicals that are functionalized to react with the epoxy groups of the solid epoxy resin. Exemplary impact modifiers include, without limitation, the rubbers disclosed in WO 2004/055092, solid grafted rubber, epoxy-polyurethane hybrids, isocyanate prepolymers (such as isocyanate-terminated polyether polyols) having molecular weights in the range between 1,000 to 10,000 daltons, maleic anhydride-modified ethylene propylene diene monomer (EPDM), styrene-butadiene block copolymers with hydrogenated polybutadiene (SEBS); acid-functional ethylene-vinyl acetate terpolymers (EVA), carboxylated styrene-butadiene rubber (CSBR), carboxylated nitrile rubber (such as HYCAR CTBN from Noveon); epoxidized polybutadiene, epoxidized natural rubber, epoxidized soybean oil; thermoplastic elastomers such as HYTREL, available from DuPont or poly-p-phenylene ether; solid hydroxyl-containing materials such as bisphenol A; and polyesters with terminal carboxylic functional groups. Other impact modifiers suitable for use include core-shell impact modifiers including, without limitation, triblock copolymers like methacrylate-butadiene-styrene (MBS) impact modifiers and acrylatestyrene-acrylic acid (ASA) impact modifiers. Commercially available MBS core shell impact modifiers include PARALOID BTA-753 (available from Rohm & Haas) and KANA ACE B-564 (available from Kaneka) and SBM (like SBM AF-X22 available from Arkema). Commercially available ASA core shell impact modifiers include GELOY 1020 from General Electric. Suitable examples include core shell impact modifiers of polysiloxane modified acrylates commercially available as GENIOPERL M23A from Wacker.

In Examples 1-5, the use of rubber-containing impact modifiers led to solid thermally expansible materials having a glass transition temperature of 95°C, 99°C, 100°C, 101°C and 101°C, respectively.

An impact modifier or combination of impact modifiers can be present in the solid thermally expansible material, by weight percent, from about less than about 20% (more preferably, from 5% to 15%), wherein 100% is the weight of the solid thermally expansible material.

### Heat-Activated Foaming Agents

A 'heat-activated foaming agent,' sometimes referred to by those of skill in the art as a 'blowing agent,' is a physical agent or chemical agent that causes its host to expand by a pre-determined amount upon the application of a pre-determined amount of heat.

Any known heat-activated physical foaming agent may be used in a solid thermally expansible material. Suitable physical heat-activated foaming agents include, without limitation, those in the EXPANCEL microsphere product line manufactured by Akzo Nobel. EXPANCEL microspheres are small, spherical plastic particles that encapsulate a low molecular weight hydrocarbon like isobutane or isopentane. When heated to the boiling points of the particular hydrocarbon, the microspheres can expand more than 40 times in volume. EXPANCEL is commercially available in many different grades and forms.

Any known heat-activated chemical foaming agent may be used in a solid thermally expansible material. Suitable chemical heat-activated foaming agents include azodicarbonamide and its modified compounds, p,p'-oxybis(benzenesulfonyl hydrazide), benzenesulfonyl hydrazide, dinitrosopentamethylene tetramine, p-toluenesulfonyl semicarbazide, and 5-phenyltetrazole.

Heat activation may result from either the external application of heat, or internal activation resulting from the release of heat in an exothermic reaction. In one embodiment, the temperature at which the expansion is activated is at least 180°C, more preferably at least 150°C.

A heat activated foaming agent or combination of foaming agents can be present in the solid thermally expansible material, by weight percent, from about 0.1% to 5% (more preferably, 0.5% to 3%) wherein 100% is the weight of the solid thermally expansible material. A heat-activated foaming agent or combination of heat-activated foaming agents cause expansion from its original pre-activation uncured state (which is 100% for reference purposes) by 20% to 300% (more preferably, by 50% to 200%).

### Other Ingredients

Embodiments of a thermally expansible material may comprise at least one 'filler.' Suitable fillers include fibrous fillers, spherical fillers, plate-like fillers, and nanoparticle fillers. Fibrous fillers can be inorganic, such as glass fiber or wollastonite fiber, or in the alternative, can be natural or organic. Natural or organic fillers include, without limitation, carbon fiber, aramid KEVLAR fiber, cellulosic fibers, jute, hemp, and the like. Spherical fillers can be organic or inorganic. Without limitation, organic spherical fillers can be polymeric spheres, and inorganic spherical fillers can be glass microballons, ceramic microspheres, fumed silica (organically modified or unmodified), pyrogenic silica (organically modified or unmodified), and the like. Plate-like fillers may be inorganic, such as graphite, talc, mica, and other materials known to those of skill in the art. Nanoparticle fillers can include, without limitation, phyllosilicate like illites or organically modified montmorillonite nanoclays (such as CLOISITE 30B or CLOISITE 93A available from Southern Clay), nanosilica (preferably with reactive groups), and carbon nanotube, hybrid organic-inorganic copolymers-polyhedral-oligomeric silsesquioxanes (POSS).

Other suitable fillers known in the thermosettable resin art may be used including, for example, calcium carbonate (including coated and/or precipitated calcium carbonate), ceramic fibers, calcium oxide, alumina, clays, sand, metals (for example, aluminum powder), glass or ceramic macrospheres, thermoplastic resins, thermoset resins, and carbon (all of which may be solid or hollow, expanded or expansible) and the like.

Fillers can be conical in shape or plate-like. Platelet sizes may range from 1 to 10 mm in length, and 5 to 10 microns in width. In one embodiment, a filler comprises a mixture of fibers having different shapes and sizes. Such a mixture has improved packing density, which results in improved impact resistance at low temperatures, such as temperatures ranging from -40°C to -5°C. Mineral fillers may be surface treated with example silanes to improve adhesion to the organic matrix. Epoxy silanes or amino silanes are suitable surface treatment.

A filler or combination of fillers can be present in the solid thermally expansible material, by weight percent, from 5% to 45% (more preferably, 10% to 30%, still more preferably from 15% to 25%), wherein 100% is the weight of the solid thermally expansible material.

Embodiments of a thermally expansible material may comprise at least one 'curing agent' or 'hardener,' sometimes described as a 'curative.' A curing agent is used herein to describe a chemical composition that aids in the hardening of a thermally expansible material. Those of skill in the art sometimes refer to such chemicals as activators, catalysts or accelerators. While certain curatives promote curing by catalytic action, others participate directly in the reaction of the solid epoxy resin and are incorporated into the thermoset polymeric network formed by a ring-opening reaction, ionic polymerization, and/or crosslinking of the resin. Many commercially available hardeners known to those of skill in the art are described in the chapter in the Encyclopedia of Polymer and Engineering referenced above.

A suitable curing agent or hardener is solid at about room temperature, and remains latent (does not promote any cross-linking reactions) up to 140°C. Such a hardener can be referred to as being 'latent.' More than one hardener may be used.

Suitable curing agents or hardeners include dicyandiamide; aromatic diamines including without limitation 3,3'-diaminodiphenylsulfone, 4,4'-diaminodiphenylsulfone, and blends thereof; imidazoles; multifunctional solid anhydrides/acids; and phenols, including mononuclear phenols, such as resorcinol, hydroquinone and N,N-bis(2-hydroxyethyl)aniline, or polynuclear phenols, such as p,p'-bis(2-hydroxyethylamino)diphenylmethane.

Other suitable curing agents or hardeners include amino compounds, amine salts, and quaternary ammonium compounds, amine-epoxy adducts, boron trihalide amine adducts, ureas, and guanidines. Suitable boron trihalide adducts include boron trichloride adducts of amines such as monoethanolamine, diethylamine, dioctylmethylamine, triethylamine, pyridine, benzylamine, benzyldimethyl amine, and the like. Boron trichloride amine adduct curatives are commercially available from CVC Specialty Chemicals, Inc.

A curing agent or combination of curing agents can be present in the solid thermally expansible material, by weight percent, from 0.1% to 5% (more preferably, 0.2% to 2%), wherein 100% is the weight of the solid thermally expansible material.

Embodiments of a thermally expansible material may comprise at least one 'accelerator,' which can either quicken the cure speed or lower the cure temperature of a thermally expansible material. Those of skill in the art sometimes use this term interchangeably with 'hardeners' and 'curatives,' as described above. Suitable accelerators include, without limitation, substituted ureas, phenols, and imidazoles and imidazole salts. Exemplary ureas include phenyl dimethyl urea, 4-chlorophenyl dimethyl urea, 2,4-toluene bis(dimethyl urea), 4,4'-methylene bis(phenyl dimethyl urea), cycloaliphatic bisurea, and the like. Exemplary imidazoles include 2-methyl imidazole, 2-isopropyl imidazole, 2-phenyl imidazole, 2-phenyl 4-methyl imidazole, 2-heptadecyl imidazole, and the like.

Some accelerators are commercially available through CVC Specialty Chemicals, such as the OMICURE U Series and the OMICURE B Series. Others are available through Air Products, including the IMICURE series, the CUREZOL series and the AMICURE UR series, from Degussa as the Dyhard UR series and Dyhard MI series. Also available from Adeka is Adeka 4338S. A suitable imidazole salt is Vestagon B55 available from Degussa.

An accelerator or combination of accelerators can be present in the solid thermally expansible material, by weight percent, from 0.01% to 5% (more preferably, 0.1% to 2%), wherein 100% is the weight of the solid thermally expansible material.

Embodiments of a thermally expansible material may comprise at least one 'thixotropic agent,' which is an additive that brings thixotropy to a product. 'Thixotropy' refers to a property of certain materials to soften upon agitation, and to return to its original state when allowed to rest. Thixotropic agents help prevent and reduce sag at the temperature of the final composition following thermal expansion.

Suitable thixotropic agents include unmodified or hydrophobically modified fumed silica and precipitated silica. Other suitable thixotropic agents include organically modified phyllosilicate clays such as bentonite, laponite, montmorillonite, and the like. Other thixotropic agents are known to those of skill in the art, such as coated precipitated calcium carbonate and polyamide waxes are suitable for use in a solid thermally expansible material, whether organic or inorganic. Also suitable are urea derivatives, which can by made, without limitation, by reacting butylamine with MDI, and used as a dispersion in a non-migrating reactive liquid rubber. Some materials identified as fillers above also have thixotropic effects, such as platelet fillers and fiber fillers.

A thixotropic agent or combination of thixotropic agents can be present in the solid thermally expansible material, by weight percent, from 0.5% to 10% (more preferably, 1% to 6%, still more preferably from 2% to 5%), wherein 100% is the weight of the solid thermally expansible material.

Embodiments of the solid thermally expansible material may also be include other additives including but not limited to adhesion promoters, colorants, stabilizers, plasticizers, wetting agents, antioxidants, each of which is commercially available and well known in the art.

Other additives can be present, by weight percent, from 0.01 % to 10% (more preferably, 0.1% to 5%, still more preferably 0.2% to 3%), wherein 100% is the weight of the solid thermally expansible material.

### Processing the solid thermally expansible material

A solid thermally expansible material may be compounded or formed into pellets using standard manufacturing equipment, then injection molded onto a carrier as described in U.S. Patent No. 6,649,243. Alternatives to injection molding are well known in the art and contemplated for use with the solid thermally expansible material. The injection molding (or any other method selected to process the uncured material) occurs at temperatures below the cure activation temperature for the expansible material. The expansible material may be processed, shaped or molded using any method known to those of skill in the art, including extrusion, performs, thermoforms with a carrier, including without limitation, a joint, a frame, or a pillar, and thermoforms without a carrier.

As exemplified in Figures 1-3, such a solid thermally expansible material (whether or not on a carrier) can be placed in an automotive cavity and activated. The activation causes the material to expand and to adhere to a substrate in the automotive cavity. Following expansion, the cured material provides structural reinforcement to the substrate.

The present invention is further illustrated by the following examples, which are not to be construed in any way as imposing limitations upon the scope thereof.

### Industrial Applicability

The following examples were prepared by mixing the ingredients in a blender, then compounding same in a twin screw extruder with a pelletizer. Specimens for mechanical testing were prepared by injection molding. Glass transition temperatures were measured by DSC unless otherwise specified. All percentages of ingredients are weight percents.

**TABLE 1**

| **Ingredients** | **Example 1** | **Example 2** |
|---|---|---|
| Solid Epoxy Resin (GT7004) | 58.44% | 61.91% |
| Impact Modifier (NIPOL 1472) | 9.51% | 7.6% |
| Impact Modifier (rubber from example 1 of WO 2004/055092) | 8.10% | 6.48% |
| Blowing Agent (EXPANCEL) | 1.34% | 1.34% |
| Aramid Fiber | 1.07% | 1.07% |
| Dicyandiamide | 0.96% | 1.03% |
| Glass fibers | 10.69% | 10.69% |
| CaCO₃ | 8.02% | 8.02% |
| Fumed Silica | 1.87% | 1.87% |

The mechanical properties for examples 1 and 2 are listed below in Table 2.

**TABLE 2**

| **Mechanical Properties** | **Example 1** | **Example 2** |
|---|---|---|
| Glass Transition (°C) | 95* | 99* |
| Tensile Strength (MPa) | 19.9 | 11.8 |
| Elongation to break (%) | 3.1 | 1.4 |
| E-Modulus (MPa 0.05 - 0.25%) | 1100 | 850 |
| E-Modulus (MPa 0.5 - 1.0%) | 1110 | 850 |
| Bending strength (MPa) | 19.3 | 18.5 |
| Bending Modulus (0.05-0.25%) (MPa) | 1060 | 680 |
| Max. deformation (mm) | 2.6 | 3.1 |

Approximation based upon measurement of identical formulation absent blowing agent.

**TABLE 3**

| **Ingredients** | **Example 3** | **Example 4** | **Example 5** |
|---|---|---|---|
| Solid Epoxy Resin (GT7004) | 53.05% | 53.05% | 53.05% |
| Impact Modifier (Eliokem Rubber NEP 401S) | 8.61% | - | - |
| Impact Modifier (Eliokem Rubber NEP 501S) | - | 8.61% | - |
| Impact Modifier (Eliokem Rubber NEP 701S) | - | - | 8.61% |
| Impact Modifier (rubber from example 1 of WO 2004/055092) | 7.35% | 7.35% | 7.35% |
| Blowing Agent (EXPANCEL) | 1.73% | 1.73% | 1.73% |
| Aramid Fiber | 1.38% | 1.38% | 1.38% |
| Glass Fiber | 13.79% | 13.79% | 13.79% |
| Dicyandiamide | 1.33% | 1.33% | 1.33% |
| Fumed Silica | 2.42% | 2.42% | 2.42% |
| CaCO ₃ | 10.34% | 10.34% | 10.34% |

The mechanical properties for examples 3 -5 are listed below in Table 4.

**TABLE 4**

| **Mechanical Properties** | **Example 3** | **Example 4** | **Example 5** |
|---|---|---|---|
| Glass Transition (°C) | 100* | 101* | 101* |
| Tensile Strength (MPa) | 12.4 | 10.6 | 7.4 |
| Elongation to break (%) | 1.8 | 1.6 | 1.1 |
| E-Modulus (MPa 0.05 - 0.25%) | 920 | 790 | 700 |
| E-Modulus (MPa 0.5 - 1.0%) | 820 | 740 | 630 |
| Bending strength (MPa) | 17.6 | 17.2 | 25.7 |
| Bending Modulus (0.05-0.25%) (MPa) | 854 | 636 | 928 |
| Max. deformation (mm) | 2.9 | 2.8 | 3.4 |

Approximation based upon measurement of identical formulation absent blowing agent.

**TABLE 5**

| **Ingredients** | **Example 6** |
|---|---|
| Solid Epoxy Resin (GT7071) | 36.95% |
| Solid Epoxy Resin (GT7255) | 24.64% |
| Impact Modifier (Crylcoat 1506-0) | 8.62% |
| Blowing Agent (EXPANCEL) | 1.11% |
| Glass Fiber | 14.87% |
| Dicyandiamide | 1.5% |
| Wollastonite | 12.32% |

The mechanical properties for example 6 are listed below in Table 6.

**TABLE 6**

| **Mechanical Properties** | **Example 6** |
|---|---|
| Glass Transition (°C) | 93* and 98* |
| Tensile Strength (MPa) | 20.5 |
| Elongation to break (%) | 1.7 |
| E-Modulus (MPa 0.5 - 1.0%) | 82 |

Approximation based upon measurement of identical formulation absent blowing agent.

**TABLE 7**

| **Ingredients** | **Example 8** | **Example 9** |
|---|---|---|
| Solid Epoxy Resin (GT7004) | 49.7% | 48.4% |
| Solid Epoxy Resin (ECN 9699) | 5.00% | 5.00% |
| Impact Modifier (GMA300 ) | 1.00% | - |
| Impact Modifier (PPO SA120) | - | 2.00% |
| Blowing Agent (EXPANCEL) | 1.50% | 1.50% |
| Glass Fiber | 14.00% | 13.90% |
| Dicyandiamide | 1.30% | 1.80% |
| Omnicure U52M | 0.20% | 0.20% |
| Fumed Silica | 2.00% | 2.00% |
| Microballoon | 15.00% | 14.90% |
| Microcrystalline wax | 5.00% | 5.00% |
| CaCO ₃ | 5.40% | 5.40% |

The mechanical properties for examples 8 and 9 are listed below in Table 8.

**TABLE 8**

| **Mechanical Properties** | **Example 8** | **Example 9** |
|---|---|---|
| Glass Transition (°C) | 111* | 121* |
| Tensile Strength (MPa) | - | 25.6 |
| Elongation to break (%) | - | 1.4 |
| E-Modulus (MPa 0.05 - 0.25%) | - | 2440 |
| E-Modulus (MPa 0.5 - 1.0%) | - | 2340 |

Approximation based upon measurement of identical formulation absent blowing agent.

**TABLE 9**

| **Ingredients** | **Example 10** | **Example 11** | **Example 12** | **Example 13** | **Example 14** |
|---|---|---|---|---|---|
| Solid Epoxy Resin (GT9654) | 50.70% | 50.70% | 50.70% | 50.70% | 50.70% |
| Solid Epoxy Resin (ECN 9699) | 5.00% | 5.00% | 5.00% | 5.00% | 5.00% |
| Impact Modifier (Elvaloy PTW) | 5.00% | 10.00% | 5.00% | 3.33% | - |
| Impact Modifier (Bynell E418) | 5.00% | - | - | - | - |
| Impact Modifier (Nylon Powder) | - | - | 5.00% | 6.67% | 10.00% |
| Blowing Agent (Azodicarbo namide) | 0.50% | 0.50% | 0.50% | 0.50% | 0.50% |
| Glass Fiber | 10.00% | 10.00% | 10.00% | 10.00% | 10.00% |
| Dicyandiami de | 1.66% | 1.66% | 1.66% | 1.66% | 1.66% |
| Omnicure U52M | 0.20% | 0.20% | 0.20% | 0.20% | 0.20% |
| Zinc oxide | 0.35% | 0.35% | 0.35% | 0.35% | 0.35% |
| Microballoon | 15.00% | 15.00% | 15.00% | 15.00% | 15.00% |
| Aramid fiber (in DER661) | 1.00% | 1.00% | 1.00% | 1.00% | 1.00% |

The mechanical properties for examples 10 - 14 are listed below in Table 10.

**TABLE 10**

| **Mechanical Properties** | **Example 10** | **Example 11** | **Example 12** | **Example 13** | **Example 14** |
|---|---|---|---|---|---|
| Glass Transition (°C) | 109* | 112* | 108* | 108* | 109* |
| E-Modulus @ 30°C (MPa)* | 1040 | 1410 | 1280 | 1480 | 1620 |
| E-Modulus @ 80°C (MPa)* | 890 | 1290 | 1090 | 1270 | 1380 |

Measured by DMA.

## Claims

1. A thermally expansible material comprising :
(a) a solid epoxy resin that is substantially free of (i) liquid epoxy resin and (ii) semi-solid epoxy resin, wherein the content of liquid epoxy resin and semi-solid epoxy resin is from 0% by weight of the epoxy resin content to less than 1.5% by weight of the epoxy resin content of the solid thermally expansible material;
(b) an impact modifier which comprises one or more thermoplastic chemical, the impact modifier is substantially free of rubber; and the thermoplastic chemical has functional groups capable of reacting with the epoxy groups on the solid epoxy resins;
(c) a curing agent; and
(d) a heat-activated foaming agent; whereby said material is adherable to a substrate following heat activation;
wherein the solid epoxy resin comprises 40% to 80%, preferably 50% to 80%, more preferably 60% to 75% by weight of the material, the material being 100%.

2. The material of claim 1 wherein the impact modifier comprises 5% to 20% by weight of the material, the material being 100%.

3. The material of one of the preceding claims, wherein the solid epoxy resin has a Mettler softening point in the range from 65° C to 160° C, preferably 70° C to 120° C.

4. The material of claim 1 wherein the curing agent is dicyandiamide or a derivative thereof.

5. The material of claim 1 further comprising a moisture release regulation system, wherein the system comprises aramid fibers.

6. The material of claim 1 further comprising from 0.01% to 5% by weight of aramid fibers, the material being 100%.

7. The material of claim 1 wherein the substrate comprises metal.

8. A method of reinforcing a substrate within a structure comprising:
(a) applying an uncured reinforcement material to at least a first portion of the cavity, the uncured reinforcement material comprising:
(i) a solid epoxy resin that is substantially free of liquid epoxy resin and semi-solid epoxy resin, wherein the content of liquid epoxy resin and semi-solid epoxy resin is from 0% by weight of the epoxy resin content to less than 1.5% by weight of the epoxy resin content of the solid thermally expansible material;
(ii) an impact modifier which comprises one or more thermoplastic chemical, the impact modifier is substantially free of rubber; and the thermoplastic chemical has functional groups capable of reacting with the epoxy groups on the solid epoxy resins;
(iii) a curing agent; and
(iv) a heat-activated foaming agent; whereby said material is adherable to the substrate following heat activation;
wherein the solid epoxy resin comprises 40% to 80%, preferably 50% to 80%, more preferably 60% to 75% by weight of the material, the material being 100%, and
(b) heating said structure to at least 150°C, thereby causing the reinforcement material to expand and adhere to at least a second portion of the substrate.

9. The method of claim 8 wherein the substrate is within an automobile.

10. The method of claim 8 wherein the substrate comprises at least a portion of an automobile frame rail.

11. The method of claim 8 wherein the substrate comprises at least a portion of an automotive pillar.

## Patentansprüche

1. Thermisch expandierbares Material, umfassend:
(a) ein festes Epoxidharz, das im Wesentlichen frei von (i) flüssigem Epoxidharz und (ii) halbfestem Epoxidharz ist, wobei der Gehalt an flüssigem Epoxidharz und halbfestem Epoxidharz 0 Gew.-% des Epoxidharzgehalts bis weniger als 1,5 Gew.-% des Epoxidharzgehalts des festen thermisch expandierbaren Materials beträgt;
(b) ein Schlagzähmodifizierungsmittel, das eine oder mehrere thermoplastische Chemikalien umfasst, wobei der Schlagzähmodifizierer im Wesentlichen frei von Kautschuk ist; und die thermoplastische Chemikalie funktionelle Gruppen aufweist, die mit den Epoxygruppen auf den festen Epoxidharzen reagieren können;
(c) ein Härtungsmittel; und
(d) ein wärmeaktiviertes Schäumungsmittel; wobei das Material nach einer Wärmeaktivierung an ein Substrat gehaftet werden kann;
wobei das feste Epoxidharz 40 bis 80 Gew.-%, vorzugsweise 50 bis 80 Gew.-%, weiter bevorzugt 60 bis 75 Gew.-%, des Materials umfasst, wobei das Material 100% ist.

2. Material nach Anspruch 1, wobei der Schlagzähmodifizierer 5 bis 20 Gew.-% des Materials umfasst, wobei das Material 100% ist.

3. Material nach einem der vorhergehenden Ansprüche, wobei das feste Epoxidharz einen Mettler-Erweichungspunkt im Bereich von 65 °C bis 160 °C, vorzugsweise 70 °C bis 120 °C aufweist.

4. Material nach Anspruch 1, wobei das Härtungsmittel Dicyandiamid oder ein Derivat davon ist.

5. Material nach Anspruch 1, ferner umfassend ein Feuchtigkeitsfreisetzungsregelsystem, wobei das System Aramidfasern umfasst.

6. Material nach Anspruch 1, ferner umfassend von 0,01 bis 5 Gew.-% Aramidfasern, wobei das Material 100% ist.

7. Material nach Anspruch 1, wobei das Substrat Metall umfasst.

8. Verfahren zur Verstärkung eines Substrats innerhalb einer Struktur, umfassend:
(a) Aufbringen eines ungehärteten Verstärkungsmaterials auf mindestens einen ersten Abschnitt des Hohlraums, wobei das ungehärtete Verstärkungsmaterial umfasst:
(i) ein festes Epoxidharz, das im Wesentlichen frei von flüssigem Epoxidharz und halbfestem Epoxidharz ist, wobei der Gehalt an flüssigem Epoxidharz und halbfestem Epoxidharz 0 Gew.-% des Epoxidharzgehalts bis weniger als 1,5 Gew.-% des Epoxidharzgehalts des festen thermisch expandierbaren Materials beträgt;
(ii) ein Schlagzähmodifizierungsmittel, das eine oder mehrere thermoplastische Chemikalien umfasst, wobei der Schlagzähmodifizierer im Wesentlichen frei von Kautschuk ist; und die thermoplastische Chemikalie Funktionsgruppen aufweist, die mit den Epoxygruppen auf den festen Epoxidharzen reagieren können;
(iii) ein Härtungsmittel; und
(iv) ein wärmeaktiviertes Schäumungsmittel; wobei das Material nach einer Wärmeaktivierung an das Substrat gehaftet werden kann;
wobei das feste Epoxidharz 40 bis 80 Gew.-%, vorzugsweise 50 bis 80 Gew.-%, weiter bevorzugt 60 bis 75 Gew.-%, des Materials umfasst, wobei das Material 100% ist, und
(b) Erwärmen der Struktur auf mindestens 150° C, wodurch bewirkt wird, dass sich das Verstärkungsmaterial ausdehnt und an mindestens einem zweiten Abschnitt des Substrats anhaftet.

9. Verfahren nach Anspruch 8, wobei das Substrat ein Automobil ist.

10. Verfahren nach Anspruch 8, wobei das Substrat mindestens einen Abschnitt einer Automobil-Rahmenschiene umfasst.

11. Verfahren nach Anspruch 8, wobei das Substrat mindestens einen Abschnitt einer Automobilsäule umfasst.

## Revendications

1. Matériau thermo-expansible comprenant :
(a) une résine époxy solide qui est sensiblement exempte de (i) résine époxy liquide et de (ii) résine époxy semi-solide, la teneur en résine époxy liquide et résine époxy semi-solide étant de 0 % en poids de la teneur en résine époxy à moins de 1,5 % en poids de la teneur en résine époxy du matériau solide thermo-expansible ;
(b) un modifiant choc qui comprend une ou plusieurs substances chimiques thermoplastiques, le modifiant choc est sensiblement exempt de caoutchouc ; et la substance chimique thermoplastique a des groupes fonctionnels susceptibles de réagir avec les groupes époxy des résines époxy solides ;
(c) un durcisseur ; et
(d) un agent moussant activé thermiquement ; ledit matériau pouvant adhérer à un substrat après activation thermique ;
dans lequel la résine époxy solide constitue 40% à 80%, de préférence 50% à 80%, plus préférablement 60% à 75% en poids du matériau, le matériau faisant 100%.

2. Matériau de la revendication 1, le modifiant choc constituant 5 % à 20 % en poids du matériau, le matériau faisant 100 %.

3. Matériau d'une des revendications précédentes, dans lequel la résine époxy solide a un point de ramollissement Mettler dans la gamme de 65 °C à 160 °C, de préférence 70 °C à 120 °C.

4. Matériau de la revendication 1 dans lequel le durcisseur est le dicyandiamide ou un dérivé de celuici.

5. Matériau de la revendication 1 comprenant en outre un système de régulation de la libération d'humidité, le système comprenant des fibres d'aramide.

6. Matériau de la revendication 1 comprenant en outre de 0,01 % à 5 % en poids de fibres d'aramide, le matériau faisant 100 %.

7. Matériau de la revendication 1 dans lequel le substrat comprend du métal.

8. Procédé de renforcement d'un substrat à l'intérieur d'une structure comprenant :
(a) l'application d'un matériau de renforcement non durci à au moins une première partie de la cavité, le matériau de renforcement non durci comprenant :
(i) une résine époxy solide qui est sensiblement exempte de résine époxy liquide et de résine époxy semi-solide, la teneur en résine époxy liquide et résine époxy semi-solide étant de 0 % en poids de la teneur en résine époxy à moins de 1,5 % en poids de la teneur en résine époxy du matériau solide thermo-expansible ;
(ii) un modifiant choc qui comprend une ou plusieurs substances chimiques thermoplastiques, le modifiant choc est sensiblement exempt de caoutchouc ; et la substance chimique thermoplastique a des groupes fonctionnels susceptibles de réagir avec les groupes époxy des résines époxy solides ;
(iii) un durcisseur ; et
(iv) un agent moussant activé thermiquement ; ledit matériau pouvant adhérer à un substrat après activation thermique ;
dans lequel la résine époxy solide constitue 40% à 80%, de préférence 50% à 80%, plus préférablement 60% à 75% en poids du matériau, le matériau faisant 100%, et
(b) le chauffage de ladite structure jusqu'à au moins 150 °C, pour provoquer ainsi l'expansion du matériau de renforcement et le faire adhérer à une deuxième partie du substrat.

9. Procédé de la revendication 8 dans lequel le substrat est à l'intérieur d'une automobile.

10. Procédé de la revendication 8 dans lequel le substrat constitue au moins une partie d'un longeron d'automobile.

11. Procédé de la revendication 8 dans lequel le substrat constitue au moins une partie d'une colonne d'automobile.
